# EUROPEAN PATENT SPECIFICATION

(11) **EP 2 444 975 B1**
(45) Date of publication and mention of the grant of the patent: **29.07.2015**
(21) Application number: 11185834.6
(22) Date of filing: 19.10.2011
(51) Int. Cl.: G21C 5/06, G21C 19/19

(54) **Nuclear reactor with fuel guide pin and fuel guide pin attachment method**
Kernreaktor mit Brennstoffführungsstift und dessen Befestigungsverfahren
Réacteur nucléaire avec tige de guidage de combustible et son procédé de fixation

(30) Priority: 20.10.2010 JP 2010235949
(43) Date of publication of application: 25.04.2012
(73) Proprietor: Mitsubishi Heavy Industries, Ltd., Tokyo 108-8215 (JP)
(72) Inventor: Nakajima, Makoto, Tokyo 108-8215 (JP)
(74) Representative: Intès, Didier Gérard André

(56) References cited:
- FR-A1- 2 717 943
- JP-U- S60 127 595
- US-A1- 2005 249 325

## Description

### Field

The present invention relates to a fuel guide pin for guiding placement of a fuel assembly to be loaded onto a core plate of a nuclear reactor, a method for attaching the fuel guide pin, a core plate to which the fuel guide pin is applied, and a nuclear reactor to which the fuel guide pin is applied.

### Background

Conventionally, an object of a fuel guide pin attachment device as described in Patent Literature 1, for example, is to attach a fuel guide pin to a core plate with a large plate thickness (for example, 300 mm to 500 mm) without having the fuel guide pin pass through the core plate. This fuel guide pin includes: an upper small diameter portion to be a pin body, which projects above the core plate; and a lower large diameter portion to be embedded in a recessed hole provided in the core plate by means of shrink fit.

### Citation List

### Patent Literature

Patent Literature 1: Japanese Utility Model Application Laid-Open No. Sho. 60-127595
US 2005/249325 discloses a device for positioning and axially aligning a fuel assembly.

### Summary

### Technical Problem

However, the core plate is provided with a continuous hole, through which a coolant is allowed to pass, around an area at which the fuel guide pin is attached. However, if it fails to obtain a sufficient distance between the lower large diameter portion and the continuous hole due to the existence of the lower large diameter portion of the fuel guide pin, the strength of the core plate may possibly be lowered.

The present invention is to solve the above-described problem, and an object thereof is to provide a fuel guide pin, a fuel guide pin attachment method, a core plate, and a nuclear reactor in which the fuel guide pin can be embedded in and fixed to the core plate while ensuring the strength of the core plate.

### Solution to Problem

According to an aspect of the present invention, a nuclear reactor including fuel guide pin includes: a shrink fit portion that is inserted into a recessed portion having a bottom and being provided in a core plate and is fixed thereto by means of shrink fit; a pin portion provided above the shrink fit portion and projecting from an upper surface of the core plate, over which a fuel to be loaded on the core plate is inserted; and a constricted portion which is provided between the shrink fit portion and the pin portion, has a constricted shape with a diameter smaller than an outer diameter of the pin portion, and includes a lower narrowed portion which is smoothly narrowed toward a most constricted portion from a side of the shrink fit portion.

According to this fuel guide pin, by providing the constricted portion between the shrink fit portion and the pin portion, a stress applied to the pin portion is concentrated on the constricted portion. Since there is provided the lower narrowed portion which is smoothly narrowed toward the most constricted portion from the shrink fit portion side, the above-described stress is released from the shrink fit portion to the core plate side. Therefore, as compared to a case where no constricted portion is provided, the outer diameter of the shrink fit portion to be embedded in the recessed portion of the core plate can be made smaller. Thus, the shrink fit portion is spaced apart from continuous holes provided in the core plate. As a result, this configuration allows the fuel guide pin to be embedded in and fixed to the core plate having a large plate thickness without having the fuel guide pin pass through the core plate while ensuring the strength of the core plate.

The fuel guide pin includes an external threaded ring which allows the pin portion to be inserted therethrough and screws into an internal thread recessed portion provided in the core plate so as to press the shrink fit portion into the recessed portion.

By further providing the external threaded ring, it is possible to prevent the shrink fit portion from coming off of the recessed portion and to control such coming-off prevention by means of a tightening force obtained by the screwing. In particular, according to the fuel guide pin including the flange portion, the flange portion is pressed against the opening outer edge of the recessed portion by the external threaded ring. Therefore, it is possible to strengthen the attachment of the pin portion to the core plate while controlling the shrink fit portion so as not to come off of the recessed portion by the tightening force obtained by the screwing.

Advantageously, the fuel guide pin includes a flange portion which is provided to a lower side of the constricted portion so as to continuously extend toward an outer radial direction, wherein the flange portion comes into contact with an opening outer edge of the recessed portion upon the fixation of the shrink fit portion.

According to this fuel guide pin, since there is provided the flange portion, the aforementioned stress released by the constricted portion is released from the flange portion to the core plate side. Therefore, it becomes possible to make the outer diameter of the shrink fit portion even smaller. Thus, the shrink fit portion is further spaced apart from the continuous holes provided in the core plate. As a result, it is possible to further ensure the strength of the core plate. Furthermore, the constricted portion includes the lower narrowed portion which is smoothly narrowed toward the most constricted portion from the shrink fit portion side, and therefore has a structure such as to release the stress concentrated on the constricted portion. Thus, as compared to a case where no constricted portion is provided, the outer diameter of the flange portion can be made smaller.

Advantageously, in the fuel guide pin, the shrink fit portion is formed to have a length spaced apart from the bottom of the recessed portion upon insertion thereof.

According to this fuel guide pin, since it is possible to avoid a situation such that a lower end surface of the shrink fit portion comes into contact with the bottom of the recessed portion during expansion at the time of shrink fit, the pin portion is prevented from being lifted by such expansion. As a result, it is possible to improve an accuracy for the attachment of the pin portion to the core plate.

Advantageously, the fuel guide pin includes an air vent hole which is provided to pass through the shrink fit portion and to be opened to inside and outside of the recessed portion, and discharges air inside the recessed portion during the insertion of the shrink fit portion.

According to this fuel guide pin, there is provided the air vent hole which passes through the shrink fit portion to be opened to the inside and outside of the recessed portion. As a result, as compared to a configuration such that an air vent groove is provided on the outer circumference surface of the shrink fit portion to be fitted to the inner wall surface of the recessed portion by friction, there is no need to shave the portion fitted by friction, and a sufficient frictional force for fitting the shrink fit portion to the recessed portion can be thus obtained. Therefore, it is possible to further strengthen the fitting of the shrink fit portion to the recessed portion.

According to another aspect of the present invention, a fuel guide pin attachment method for nuclear reactor for attaching to a core plate a fuel guide pin including a constricted portion which is provided between a shrink fit portion and a pin portion in a constricted shape having a smaller diameter than an outer diameter of the pin portion and has a lower narrowed portion smoothly narrowed toward a most constricted portion from a side of the shrink fit portion, includes: inserting the shrink fit portion, which has been cooled, into a recessed portion which is provided in the core plate and has a bottom; and screwing an external threaded ring, into which the pin portion has been inserted, into an internal thread recessed portion provided in the core plate so as to press the shrink fit portion into the recessed portion, after the shrink fit portion is expanded and thereby fixed to the recessed portion.

According to this fuel guide pin attachment method, after the shrink fit portion is fixed to the recessed portion by means of shrink fit, the external threaded ring, into which the pin portion has been inserted, is screwed with the internal thread recessed portion provided in the core plate. As a result, it is possible to prevent the shrink fit portion from coming off of the recessed portion, and to control such coming-off prevention by means of a tightening force obtained by the screwing.

Advantageously, in the fuel guide pin attachment method for nuclear reactor includes fixing the core plate and the external threaded ring by welding after the external threaded ring is screwed into the internal thread recessed portion.

According to this fuel guide pin attachment method, the external threaded ring is prevented from turning by welding the external threaded ring. As a result, it is possible to reliably prevent the shrink fit portion from coming off of the recessed portion, and to maintain the tightening force obtained by the screwing of the external threaded ring.

According to still another aspect of the present disclosure, a core plate on which a fuel assembly is placed, includes the fuel guide pin of any of the above.

According to this core plate, by providing the constricted portion between the shrink fit portion and the pin portion, a stress applied to the pin portion is concentrated on the constricted portion. Since there is provided the lower narrowed portion which is smoothly narrowed toward the most constricted portion from the shrink fit portion side, the above-described stress is released from the shrink fit portion to the core plate side. Therefore, as compared to a case where no constricted portion is provided, the outer diameter of the shrink fit portion to be embedded in the recessed portion of the core plate can be made smaller. Thus, the shrink fit portion is spaced apart from the continuous holes provided in the core plate. As a result, this configuration allows the fuel guide pin to be embedded in and fixed to the core plate having a large plate thickness without having the fuel guide pin pass through the core plate while ensuring the strength of the core plate. That is, it is possible to obtain the core plate whose strength is ensured.

According to still another aspect of the present disclosure, a nuclear reactor in which a fuel assembly is loaded, includes the fuel guide pin of any of the above.

According to this nuclear reactor, by providing the constricted portion between the shrink fit portion and the pin portion, a stress applied to the pin portion is concentrated on the constricted portion. Since there is provided the lower narrowed portion which is smoothly narrowed toward the most constricted portion from the shrink fit portion side, the above-described stress is released from the shrink fit portion to the core plate side. Therefore, as compared to a case where no constricted portion is provided, the outer diameter of the shrink fit portion to be embedded in the recessed portion of the core plate can be made smaller. Thus, the shrink fit portion is spaced apart from the continuous holes provided in the core plate. As a result, this configuration allows the fuel guide pin to be embedded in and fixed to the core plate having a large plate thickness without having the fuel guide pin pass through the core plate while ensuring the strength of the core plate. That is, it is possible to obtain a highly-reliable reactor having the core plate whose strength is ensured.

### Advantageous Effects of Invention

The present invention allows the fuel guide pin to be embedded in and fixed to the core plate while ensuring the strength of the core plate.

### Brief Description of Drawings

FIG. 1 is a schematic view of a nuclear reactor according to an embodiment of the present invention.
FIG. 2 is a cross-sectional view taken along line A-A in FIG. 1.
FIG. 3 is a partial perspective view of a core plate according to an embodiment of the present invention.
FIG. 4 is a sectional side view of a fuel guide pin according to an embodiment of the present invention.
FIG. 5 is a sectional side view of another fuel guide pin according to an embodiment of the present invention.
FIG. 6 is a perspective view showing the another fuel guide pin before attachment according to the embodiment of the present invention.

### Description of Embodiments

An embodiment according to the present invention will be described in detail below with reference to the drawings. Note that the present invention is not limited to this embodiment. Constituent elements in the embodiment to be described below include those which can be replaced and easily made by those skilled in the art, or those substantially the same.

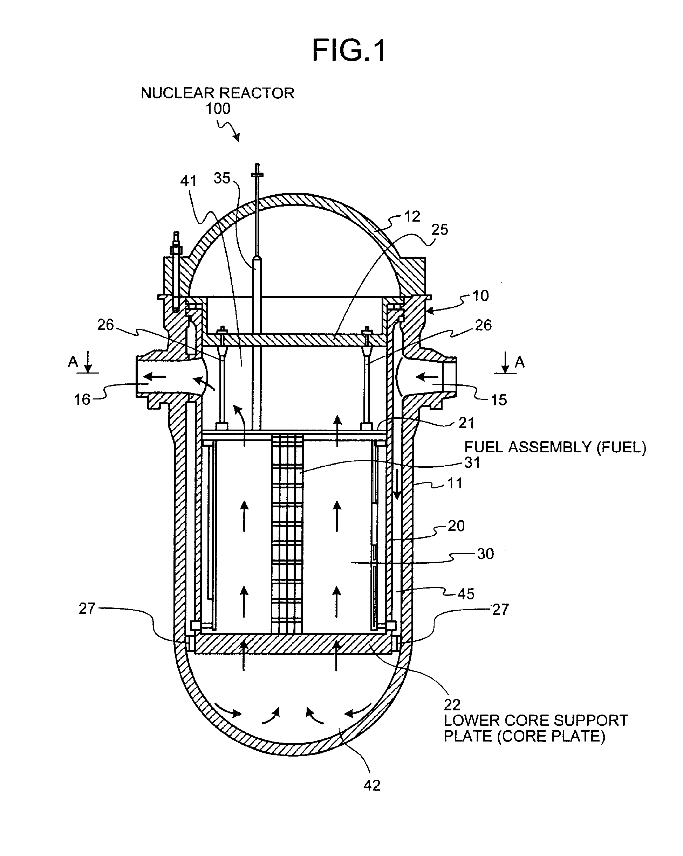

FIG. 1 is a schematic view of a nuclear reactor according to an embodiment of the present invention. Note that in the following description, a description will be made while the upper side of a nuclear reactor 100 in an installed state when used and the upper side in each section are on the same side, and the lower side thereof in the installed state when used and the lower side in each section are on the same side. The nuclear reactor 100 shown in FIG. 1 is a pressurized water reactor (PWR) in which passages used when deriving an energy are separated into a primary cooling system and a secondary cooling system. A nuclear power plant using a pressurized water reactor will be roughly described below. In the pressurized water reactor, light water (coolant) is used as a reactor coolant and a neutron moderator. By providing a pressurizer (illustration thereof is omitted) in the primary cooling system which is a circulation passage of the light water, the primary cooling system makes the light water into high-temperature and high-pressure water which does not boil over the entire core. The primary cooling system sends the high-temperature and high-pressure water to a steam generator (illustration thereof is omitted), which is a section for performing a heat exchange with the secondary cooling system, and performs a heat exchange with light water circulating through the secondary cooling system. The secondary cooling system generates steam by this heat exchange, and sends the generated steam to a turbine generator (illustration thereof is omitted). As a result, a power is generated at the turbine generator.

In the nuclear reactor 100 according to the present embodiment, which is provided as a pressurized water reactor as described above, a reactor vessel 10 provided as a pressure vessel is configured by a reactor vessel main unit 11 and a reactor vessel lid 12 which is attached to the upper portion of the reactor vessel main unit 11 and which can be opened or closed with respect to the reactor vessel main unit 11 so that a core internal can be inserted therein. Of these, the reactor vessel main unit 11 is formed in a substantially cylindrical shape such that the upper portion thereof in a vertical direction when the nuclear reactor 100 is installed is opened, and the lower portion thereof is closed to provide a spherical shape. The reactor vessel main unit 11 also includes inlet nozzles 15 and outlet nozzles 16 formed in the vicinity of the upper end side which is an end portion on the opening side and provided for supplying and discharging light water as primary cooling water, which is cooling water used in the primary cooling system.

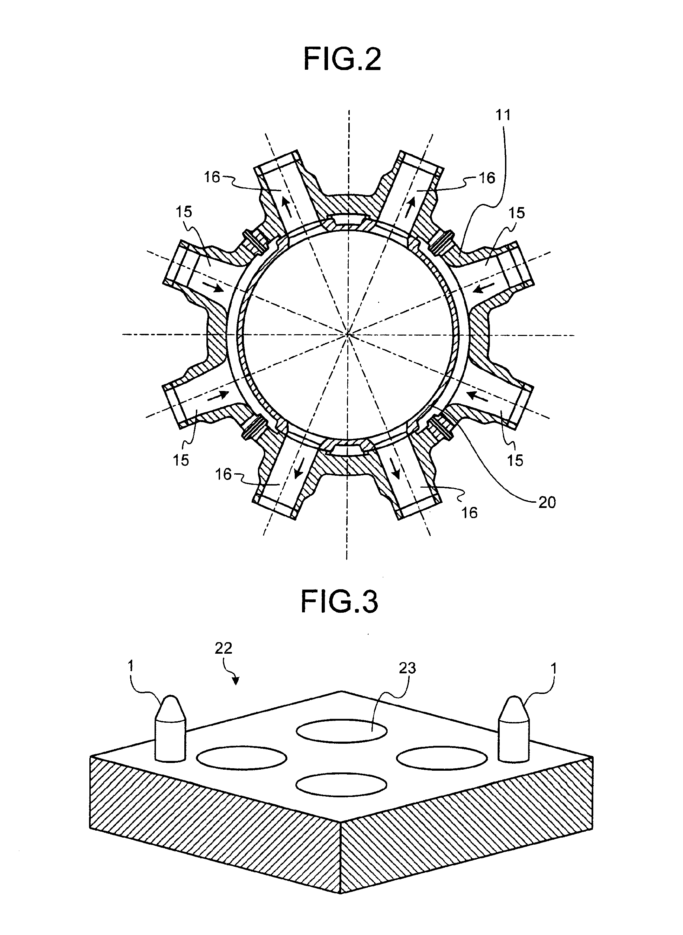

FIG. 2 is a cross-sectional view taken along line A-A in FIG. 1, and shows an example of the arrangement of the inlet nozzles 15 and the outlet nozzles 16 formed in the reactor vessel main unit 11.

Inside the reactor vessel main unit 11, provided below the inlet nozzles 15 and the outlet nozzles 16 is a core barrel 20 formed in a substantially cylindrical shape. The core barrel 20 is formed to have a substantially cylindrical shape. The core barrel 20 is provided to have a predetermined space between the inner surface of the reactor vessel main unit 11 and the core barrel 20, and provided such that the central axis thereof coincides with that of the cylindrical shape of the reactor vessel main unit 11.

Inside the reactor vessel main unit 11, an upper core plate 21 is positioned horizontally with respect to the core barrel 20 by pins (illustration thereof is omitted) provided to the core barrel 20. The upper core plate 21 is formed in a circular plate shape and includes a number of continuous holes (illustration thereof is omitted) passing therethrough. The upper core plate 21 is provided horizontally inside the reactor vessel main unit 11. The bottom portion of the core barrel 20 is connected to a lower core support plate 22. As with the upper core plate 21, the lower core support plate 22 is formed in a circular plate shape and includes a number of continuous holes 23 (see FIG. 3) passing therethrough. The lower core support plate 22 is provided horizontally inside the reactor vessel main unit 11.

Inside the reactor vessel main unit 11, an upper core support plate 25 is fixed above the core barrel 20. A plurality of core support rods 26 are provided hanging down from the upper core support plate 25, and the upper core support plate 25 hangs the upper core plate 21 via the core support rods 26 and supports the upper core plate 21 in a vertical direction. On the other hand, the lower core support plate 22 is positioned and held by a plurality of radial keys 27 with respect to the inner surface of the reactor vessel main unit 11. As a result, the core barrel 20 is positioned and held by the plurality of radial keys 27 with respect to the inner surface of the reactor vessel main unit 11.

Thus, a core 30 is formed by the thus provided core barrel 20, upper core plate 21, and lower core support plate 22. In the core 30, a number of fuel assemblies (fuel) 31 are arranged. The fuel assembly 31 is formed by bundling a number of fuel rods in a grid shape by a support grid. Although not shown clearly in the figure, an upper nozzle is fixed to the upper end portion of the fuel assembly 31, and a lower nozzle is fixed to the lower end portion thereof. Moreover, although not shown clearly in the figure, the fuel assembly 31 includes, in addition to a number of fuel rods, a control rod guide tube into which a control rod is inserted, and an in-core instrument guide tube into which an in-core instrument detector is inserted.

The upper core support plate 25 supports control rod cluster guide tubes 35 with a number of control rod cluster guide tubes 35 passing through the upper core support plate 25. The control rod cluster guide tube 35 is provided as a guide tube for a cluster type control rod (illustration thereof is omitted) such that a plurality of control rods are driven altogether. A control rod cluster drive shaft extending out from a control rod actuator (illustration thereof is omitted) provided in the reactor vessel lid 12 passes through the control rod cluster guide tube 35 and extends out to a place above the fuel assembly 31. Note that the control rod is attached to the lower end portion of the control rod cluster drive shaft and being inserted into the control rod guide tube provided to the fuel assembly 31.

Inside the reactor vessel 10, a portion positioned above the core 30 and communicated with the outlet nozzles 16 is formed as an upper plenum 41. On the other hand, a hemispherical space positioned below the core 30 and formed by the lower core support plate 22 and the spherical inner surface of the closed portion of the lower portion of the reactor vessel main unit 11 is formed as a lower plenum 42. Furthermore, a portion formed between the reactor vessel 10 and the core barrel 20 and communicated with the inlet nozzle 15 and the lower plenum 42 is formed as a downcomer portion 45. The upper plenum 41 is formed by being partitioned by the core barrel 20, the upper core support plate 25, and the upper core plate 21. The upper plenum 41 is communicated with the outlet nozzles 16 and also with the core 30 via a number of continuous holes formed in the upper core plate 21. The lower plenum 42 is formed by being partitioned by the lower core support plate 22, which is the bottom portion of the core barrel 20, and the reactor vessel main unit 11, and communicated with the core 30 through a number of continuous holes 23 (see FIG. 3) formed in the lower core support plate 22. The downcomer portion 45 is formed by being partitioned by the reactor vessel main unit 11 and the side wall of the core barrel 20. The upper portion of the downcomer portion 45 is communicated with the inlet nozzle 15, and the lower portion thereof is communicated with the lower plenum 42.

When operating the thus configured nuclear reactor 100, while circulating light water used as a coolant and a neutron moderator therethrough, a fissile material such as uranium 235 or plutonium contained in the fuel assembly 31 as a fuel constituting the fuel assembly 31 is allowed to make a fission reaction. In order to make a fission reaction occur for a fissile material, the control rod cluster drive shaft is moved by the control rod actuator provided in the reactor vessel lid 12 to adjust an insertion amount of the control rod into the fuel assembly 31. As a result, a fission reaction in the core 30 is controlled. When the fissile material fissions, a thermal energy is generated. However, since the surroundings of the fuel assembly 31 are filled up with the circulating light water, this thermal energy is transmitted to the light water surrounding the fuel assembly 31. As a result, the light water filled inside the reactor vessel 10 is heated. The high-temperature light water which has been heated by the thermal energy generated upon the fission reaction as described above is discharged from the outlet nozzle 16 and sent to the steam generator.

That is, the fissile material contained in the fuel assembly 31 discharges neutrons by the fission thereof. The light water used as a moderator and cooling water in the primary cooling system lowers the kinetic energy of the discharged fast neutrons so that they are turned into thermal neutrons, makes new fission more likely to occur, and takes away the generated heat to achieve cooling.

Moreover, the control rod is provided so that the number of neutrons generated in the core 30 can be adjusted by absorbing neutrons discharged upon the fission of a fissile material. For example, when an insertion amount of the control rod into the fuel assembly 31 is increased, an amount of neutrons absorbed by the control rod is increased. Therefore, an amount of neutrons making the fissile material fission is decreased. Conversely, when the control rod is moved in a pull-out direction to reduce an insertion amount of the control rod into the fuel assembly 31, an amount of neutrons absorbed by the control rod is reduced. Therefore, an amount of neutrons making the fissile material fission is increased. Accordingly, it is possible to change a frequency with which the fissile material fissions. Therefore, when operating the nuclear reactor 100, a fission reaction is controlled by adjusting the insertion amount of the control rod, and the amount of thermal energy generated by the fission reaction is thereby adjusted.

Moreover, when operating the nuclear reactor 100, light water is circulated in the primary cooling system. The light water flows into the reactor vessel main unit 11 from the four inlet nozzles 15. Then, the light water flows down in a downward direction through the downcomer portion 45 communicated with the inlet nozzles 15 to reach the lower plenum 42, and then changes the flowing direction thereof upwardly by the spherical inner surface of the lower plenum 42. As a result, the light water rises out from the lower plenum 42, passes through the continuous holes 23 of the lower core support plate 22, and then flows into the core 30. The light water having flowed into the core 30 absorbs the thermal energy generated from the fuel assembly 31 disposed in the core 30, thereby cooling the fuel assembly 31. On the other hand, the temperature of the light water becomes high, and the light water rises up to the upper core plate 21. The high-temperature light water having reached to the upper core plate 21 passes through the continuous holes in the upper core plate 21 to reach the upper plenum 41, and is then discharged from the reactor vessel main unit 11 through the outlet nozzles 16.

FIG. 3 is a partial perspective view of a core plate according to an embodiment of the present invention. The core plate, i.e., the lower core support plate 22 described above includes a number of continuous holes 23 passing therethrough in the vertical direction which is a plate thickness direction. Moreover, the lower core support plate 22 includes on an upper surface thereof fuel guide pins 1 provided to project therefrom. The fuel guide pin 1 is inserted into a hole provided in the lower nozzle of the fuel assembly 31 as a fuel. The fuel guide pin 1 is used for the placement of the fuel assembly 31 onto the lower core support plate 22 by guiding the position of the fuel assembly 31. At least two fuel guide pins 1 are used for one fuel assembly 31 as a set. A plurality of such sets are provided so that a number of fuel assemblies 31 can be placed on the lower core support plate 22.

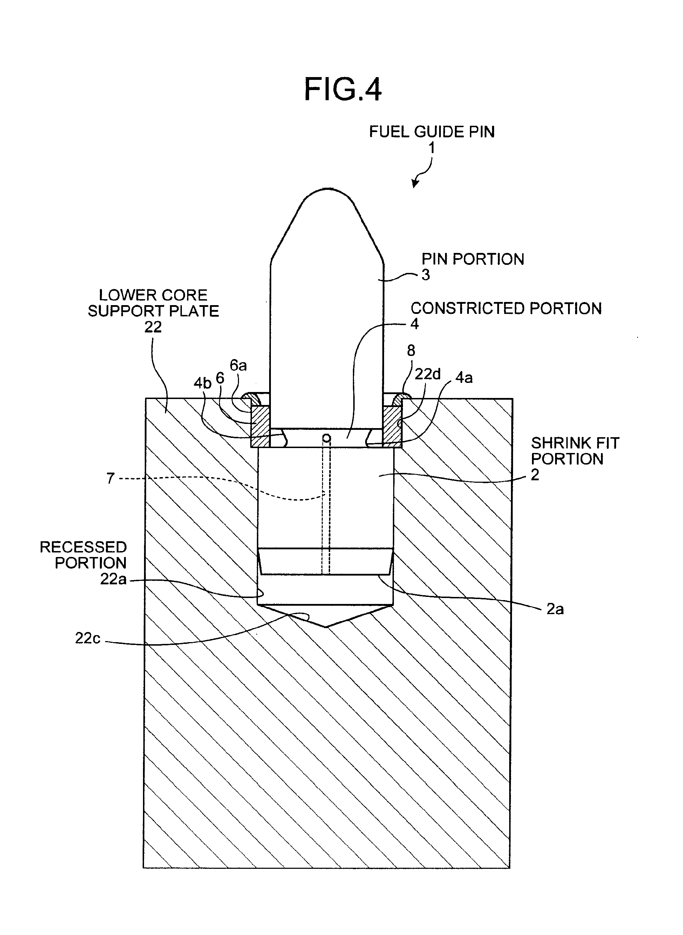

FIG. 4 is a sectional side view of the fuel guide pin according to the present embodiment. As shown in FIG. 4, the fuel guide pin 1 is made of a metal material, and includes a shrink fit portion 2, a pin portion 3, and a constricted portion 4.

The shrink fit portion 2 is formed in a rod shape extending in the vertical direction, inserted into a recessed portion 22a having a bottom and being provided in the lower core support plate (core plate) 22, and fitted to the recessed portion 22a by shrink fit, thereby being fixed to the lower core support plate 22. Although the shrink fit portion 2 is formed in a cylindrical shape whose cross section is circular in the present embodiment, the cross section may be elliptical or polygonal. In this case, the recessed portion 22a has a circular, elliptical, or polygonal open shape conforming to the cross-sectional shape of the shrink fit portion 2. That is, it is only necessary that the shrink fit portion 2 has a cross-sectional shape conforming to the open shape of the recessed portion 22a so that the shrink fit portion 2 can be inserted into the recessed portion 22a during the contraction of the metal due to the cooling thereof and fitted to the inner wall surface of the recessed portion 22a by the friction therewith during the following expansion of the metal. Moreover, the shrink fit portion 2 is formed with the lower end portion thereof facing the bottom side of the recessed portion 22a having a tapered shape. By forming the lower end portion in a tapered shape as described above, the insertion of the shrink fit portion 2 into the recessed portion 22a is facilitated.

The pin portion 3 is formed in a rod shape extending in the vertical direction and continuous with the upper side of the shrink fit portion 2. The pin portion 3 is provided projecting from the upper surface of the lower core support plate 22 with the shrink fit portion 2 being fitted to the recessed portion 22a, and is inserted into the hole of the lower nozzle of the fuel assembly 31. Although the pin portion 3 is formed in a cylindrical shape whose cross section is circular in the present embodiment, the cross section may be elliptical or polygonal. In this case, the hole of the lower nozzle has a circular, elliptical, or polygonal open shape conforming to the cross-sectional shape of the pin portion 3. That is, it is only necessary that the pin portion 3 has a cross-sectional shape conforming to the open shape of the hole so that the pin portion 3 can be inserted into the hole of the lower nozzle. Moreover, the pin portion 3 is formed with the upper end portion thereof which projects from the upper surface of the lower core support plate 22 having a tapered shape. By forming the upper end portion in a tapered shape as described above, the insertion of the pin portion 3 into the hole of the lower nozzle is facilitated.

The constricted portion 4 is provided between the shrink fit portion 2 and the pin portion 3, and formed in a constricted shape to have a smaller diameter than the outer diameter of the pin portion 3. At a lower portion thereof on the shrink fit portion 2 side, the constricted portion 4 includes a lower narrowed portion 4a having an arc shape which is smoothly narrowed toward the most constricted portion from the lower end of the constricted portion 4 on the shrink fit portion 2 side. Moreover, the constricted portion 4 further includes an upper narrowed portion 4b having an arc shape or a tapered shape such that an upper portion thereof on the pin portion 3 side is smoothly narrowed toward the most constricted portion from the upper end of the constricted portion 4.

As described above, the fuel guide pin 1 of the present embodiment includes: the shrink fit portion 2 which is inserted into the recessed portion 22a having a bottom and being provided in the lower core support plate 22 and is fixed thereto by shrink fit; the pin portion 3 provided above the shrink fit portion 2 and projecting from the upper surface of the lower core support plate 22, over which the fuel assembly 31 to be loaded onto the lower core support plate 22 is inserted; and the constricted portion 4 which is provided between the shrink fit portion 2 and the pin portion 3, is formed in a constricted shape to have a smaller diameter than the outer diameter of the pin portion 3, and includes the lower narrowed portion 4a smoothly narrowed toward the most constricted portion from the shrink fit portion 2 side.

According to this fuel guide pin 1, by providing the constricted portion 4 between the shrink fit portion 2 and the pin portion 3, a stress applied to the pin portion 3 is concentrated on the constricted portion 4. Since there is provided the lower narrowed portion 4a having an arc shape which is smoothly narrowed toward the most constricted portion from the lower end of the constricted portion 4 on the shrink fit portion 2 side, the above-described stress is released from the shrink fit portion 2 to the lower core support plate 22 side. Therefore, as compared to a case where no constricted portion 4 is provided, the outer diameter of the shrink fit portion 2 to be embedded in the recessed portion 22a of the lower core support plate 22 can be made smaller. Thus, the shrink fit portion 2 is spaced apart from the continuous holes 23 provided in the lower core support plate 22. As a result, this configuration can allow the fuel guide pin 1 to be embedded in and fixed to the lower core support plate 22 having a plate thickness of 300 mm to 500 mm, for example, without having the fuel guide pin 1 pass through the lower core support plate 22 while ensuring the strength of the lower core support plate 22.

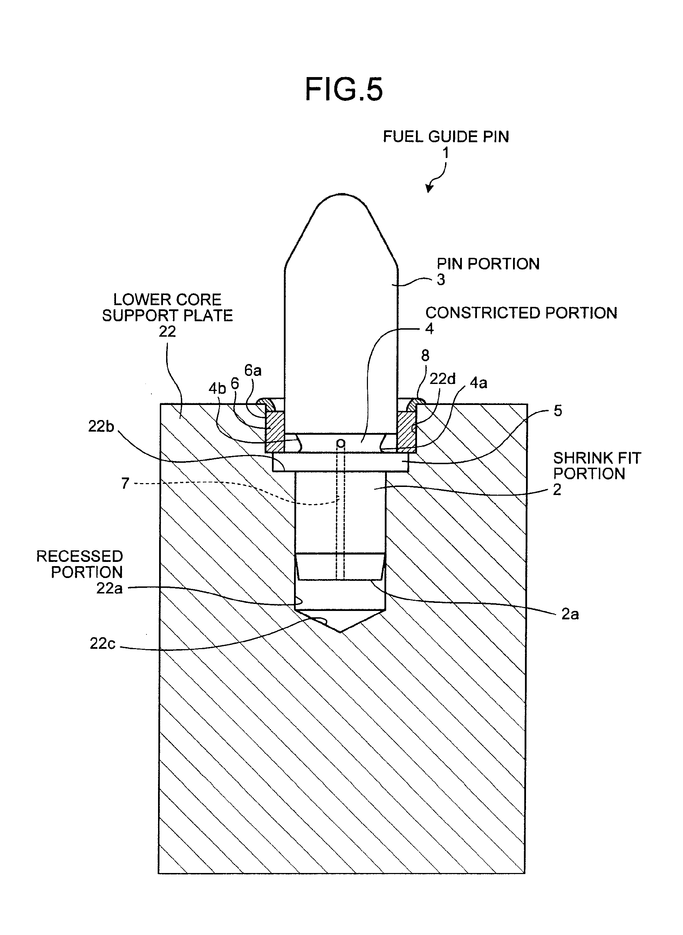

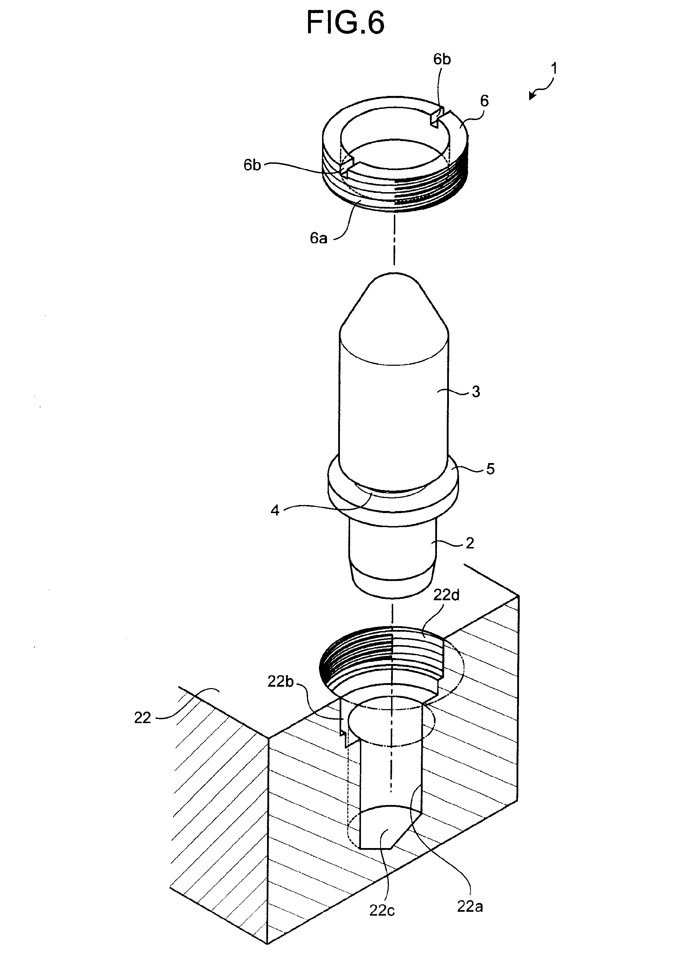

FIG. 5 is a sectional side view of another fuel guide pin according to the present embodiment. FIG. 6 is a perspective view showing the another fuel guide pin before attachment according to the embodiment of the present invention. As shown in FIGS. 5 and 6, the fuel guide pin 1 further includes a flange portion 5 in addition to the shrink fit portion 2, the pin portion 3, and the constricted portion 4 described above.

The flange portion 5 is provided below the constricted portion 4 to be continuous with the lower narrowed portion 4a and to have a circular plate shape extending outwardly in the radial direction. That is, the flange portion 5 is provided between the constricted portion 4 and the shrink fit portion 2. The flange portion 5 comes into contact with the opening outer edge of the recessed portion 22a when the shrink fit portion 2 is fixed to the recessed portion 22a. Moreover, in the lower core support plate 22, a seat 22b against which the lower surface of the flange portion 5 abuts is provided to be dented from the upper surface of the lower core support plate 22 at the opening outer edge of the recessed portion 22a.

According to this fuel guide pin 1, since there is provided the flange portion 5, the aforementioned stress released by the constricted portion 4 is released to the lower core support plate 22 side from the flange portion 5. Therefore, it becomes possible to make the outer diameter of the shrink fit portion 2 even smaller. Thus, the shrink fit portion 2 is further spaced apart from the continuous holes 23 provided in the lower core support plate 22. As a result, it becomes possible to further ensure the strength of the lower core support plate 22. Furthermore, as described above, at a lower portion thereof on the shrink fit portion 2 side the constricted portion 4 includes the lower narrowed portion 4a having an arc shape which is smoothly narrowed toward the most constricted portion from the lower end of the constricted portion 4 on the shrink fit portion 2 side, and therefore has a structure such as to release the stress concentrated on the constricted portion 4. Thus, as compared to a case where no constricted portion 4 is provided, the outer diameter of the flange portion 5 can be made smaller.

As shown in FIGS. 4 and 5, in the fuel guide pin 1 of the present embodiment, the shrink fit portion 2 is formed with a length so as to be spaced apart from the bottom of the recessed portion 22a when inserted in the recessed portion 22a. That is, the length of the shrink fit portion 2 in the vertical direction is made smaller than the depth of the recessed portion 22a.

According to this fuel guide pin 1, since it is possible to avoid a situation such that a lower end surface 2a of the shrink fit portion 2 comes into contact with a bottom 22c of the recessed portion 22a during expansion at the time of shrink fit, the pin portion 3 is not lifted by such expansion. As a result, it becomes possible to improve an accuracy for the attachment of the pin portion 3 to the lower core support plate 22.

Moreover, as shown in FIGS. 4 to 6, the fuel guide pin 1 of the present embodiment further includes an external threaded ring 6 which screws with an internal thread recessed portion 22d provided in the lower core support plate 22 while the pin portion 3 is inserted therethrough and thereby presses the shrink fit portion 2 into the recessed portion 22a.

The external threaded ring 6 is formed in a ring shape so that the pin portion 3 is inserted therethrough, and includes an external thread 6a provided on the outer circumference surface thereof. The inner diameter of the ring shape of the external threaded ring 6 is made larger than the outer diameter of the pin portion 3. That is, there is formed a gap between the inner diameter of the ring shape of the external threaded ring 6 and the outer diameter of the pin portion 3. The internal thread recessed portion 22d is formed in an opening portion of the recessed portion 22a. That is, the internal thread recessed portion 22d is dented from the upper surface of the lower core support plate 22, and includes, on the inner circumference surface thereof, an internal thread with which the external thread 6a of the external threaded ring 6 screws.

Moreover, the external threaded ring 6 is formed so that the pin portion 3 is inserted therethrough and so as to be accommodated within the internal thread recessed portion 22d when screwed with the internal thread recessed portion 22d. Thus, the external threaded ring 6 includes, on the upper surface thereof, recessed groove-shaped engagement portions 6b formed along the radial direction thereof. For example, a bifurcated tool (illustration thereof is omitted), which does not come in contact with the pin portion 3 or the internal thread recessed portion 22d, is inserted into the engagement portions 6b. Using the tool, the external threaded ring 6 is allowed the pin portion 3 to be inserted therethrough and screws with the internal thread recessed portion 22d. Note that the shape of the engagement portion 6b is not limited to the recessed groove shape as long as the above-described tool can engage therewith and the external threaded ring 6 can be screwed with the internal thread recessed portion 22d. For example, although not clearly shown in the figure, the engagement portions 6b may be formed in recessed hole shapes which are disposed side by side in the radial direction on the upper surface of the external threaded ring 6.

According to this fuel guide pin 1, by further providing the external threaded ring 6, it is possible to prevent the shrink fit portion 2 from coming off of the recessed portion 22a, and it becomes possible to control such coming-off prevention by means of a tightening force obtained by the screwing. Particularly, in a case of a configuration further including the flange portion 5 as in the fuel guide pin 1 shown in FIGS. 5 and 6, the flange portion 5 is pressed against the seat 22b by the external threaded ring 6. Therefore, it becomes possible to strengthen the attachment of the pin portion 3 to the lower core support plate 22 while controlling the shrink fit portion 2 so as not to come off of the recessed portion 22a by the tightening force obtained by the screwing.

Moreover, as shown in FIGS. 4 and 5, the fuel guide pin 1 of the present embodiment further includes an air vent hole 7 for discharging air inside the recessed portion 22a during the during the insertion of the shrink fit portion 2, which is provided while passing through the shrink fit portion 2 to be opened to the inside and outside of the recessed portion 22a.

The air vent hole 7 is provided extending in the vertical direction along the center of the shrink fit portion 2. The air vent hole 7 is opened at the lower end surface 2a of the shrink fit portion 2 to be communicated with the inside of the recessed portion 22a. In addition, the air vent hole 7 bends laterally at the position of the constricted portion 4 to be opened and communicated with the outside of the recessed portion 22a.

According to this fuel guide pin 1, the air vent hole 7, which passes through the shrink fit portion 2 to be opened to the inside and outside of the recessed portion 22a, is provided. As a result, as compared to a configuration such that an air vent groove is provided on the outer circumference surface of the shrink fit portion 2 to be fitted to the inner wall surface of the recessed portion 22a by friction, there is no need to shave the portion fitted by friction, and a sufficient frictional force for fitting the shrink fit portion 2 to the recessed portion 22a can be thus obtained. Therefore, it becomes possible to further strengthen the fitting of the shrink fit portion 2 to the recessed portion 22a.

A fuel guide pin attachment method for attaching the above-described fuel guide pin 1 to the lower core support plate 22 will be described. As shown in FIG. 6, the fuel guide pin attachment method of the present embodiment is a method for attaching the fuel guide pin 1 to the lower core support plate 22 wherein the fuel guide pin 1 includes the constricted portion 4 that is provided between the shrink fit portion 2 and the pin portion 3 in a constricted shape with a smaller diameter than the outer diameter of the pin portion 3 and has the lower narrowed portion 4a smoothly narrowed toward the most constricted portion from the shrink fit portion 2 side. This fuel guide pin attachment method includes the steps of: inserting the shrink fit portion 2, which has been cooled, into the recessed portion 22a which is provided in the lower core support plate 22 and has a bottom; and after the shrink fit portion 2 is expanded and thereby fixed to the recessed portion 22a, screwing the external threaded ring 6, into which the pin portion 3 has been inserted, with the internal thread recessed portion 22d provided in the lower core support plate 22 so as to press the shrink fit portion 2 into the recessed portion 22a.

According to this fuel guide pin attachment method, after the shrink fit portion 2 is fixed to the recessed portion 22a by means of shrink fit, the external threaded ring 6, into which the pin portion 3 has been inserted, is screwed with the internal thread recessed portion 22d provided in the lower core support plate 22. As a result, it is possible to prevent the shrink fit portion 2 from coming off of the recessed portion 22a, and it becomes possible to control such coming-off prevention by means of a tightening force obtained by the screwing.

Note that in a case of the configuration further including the flange portion 5 as in the fuel guide pin 1 shown in FIGS. 5 and 6, the flange portion 5 is pressed against the seat 22b by the external threaded ring 6. Therefore, it becomes possible to strengthen the attachment of the pin portion 3 to the lower core support plate 22 while controlling the shrink fit portion 2 so as not to come off of the recessed portion 22a by means of the tightening force obtained by the screwing.

Moreover, as shown in FIGS. 4 and 5, the fuel guide pin attachment method of the present embodiment further includes a step of fixing the lower core support plate 22 and the external threaded ring 6 by a weld 8 after the external threaded ring 6 is screwed with the internal thread recessed portion 22d. The weld 8 is provided continuously around the external threaded ring 6.

According to this fuel guide pin attachment method, the weld 8 prevents the external threaded ring 6 from turning. Therefore, it is possible to reliably prevent the shrink fit portion 2 from coming off of the recessed portion 22a, and it becomes possible to maintain the tightening force obtained by the screwing of the external threaded ring 6.

According to the lower core support plate 22 of the present embodiment to which the above-described fuel guide pin 1 is attached, by providing the constricted portion 4 between the shrink fit portion 2 and the pin portion 3, a stress applied to the pin portion 3 is concentrated on the constricted portion 4. Since there is provided the lower narrowed portion 4a having an arc shape which is smoothly narrowed toward the most constricted portion from the lower end of the constricted portion 4 on the shrink fit portion 2 side, the above-described stress is released from the shrink fit portion 2 to the lower core support plate 22 side. Therefore, as compared to a case where no constricted portion 4 is provided, the outer diameter of the shrink fit portion 2 to be embedded in the recessed portion 22a of the lower core support plate 22 can be made smaller. Thus, the shrink fit portion 2 is spaced apart from the continuous holes 23 provided in the lower core support plate 22. As a result, this configuration can allow the fuel guide pin 1 to be embedded in and fixed to the lower core support plate 22 having a plate thickness of 300 mm to 500 mm, for example, without having the fuel guide pin 1 pass through the lower core support plate 22 while ensuring the strength of the lower core support plate 22. That is, it becomes possible to obtain the lower core support plate 22 whose strength is ensured.

Furthermore, according to the nuclear reactor 100 of the present embodiment having the lower core support plate 22 to which the above-described fuel guide pin 1 is attached, by providing the constricted portion 4 between the shrink fit portion 2 and the pin portion 3, a stress applied to the pin portion 3 is concentrated on the constricted portion 4. Since there is provided the lower narrowed portion 4a having an arc shape which is smoothly narrowed toward the most constricted portion from the lower end of the constricted portion 4 on the shrink fit portion 2 side, the above-described stress is released from the shrink fit portion 2 to the lower core support plate 22 side. Therefore, as compared to a case where no constricted portion 4 is provided, the outer diameter of the shrink fit portion 2 to be embedded in the recessed portion 22a of the lower core support plate 22 can be made smaller. Thus, the shrink fit portion 2 is spaced apart from the continuous holes 23 provided in the lower core support plate 22. As a result, this configuration can allow the fuel guide pin 1 to be embedded in and fixed to the lower core support plate 22 having a plate thickness of 300 mm to 500 mm, for example, without having the fuel guide pin 1 pass through the lower core support plate 22 while ensuring the strength of the lower core support plate 22. That is, it becomes possible to obtain the highly-reliable nuclear reactor 100 having the lower core support plate 22 whose strength is ensured.

### Industrial Applicability

As described above, the fuel guide pin, the fuel guide pin attachment method, the core plate, and the nuclear reactor according to the present invention are suitable for allowing the fuel guide pin to be embedded in and fixed to the core plate while ensuring the strength of the core plate.

### Reference Signs List

- 1: fuel guide pin
- 2: shrink fit portion
- 2a: lower end surface
- 3: pin portion
- 4: constricted portion
- 4a: lower narrowed portion
- 4b: upper narrowed portion
- 5: flange portion
- 6: external threaded ring
- 6a: external thread
- 6b: engagement portion
- 7: air vent hole
- 8: welding
- 22: lower core support plate (core plate)
- 22a: recessed portion
- 22b: seat
- 22c: bottom
- 22d: internal thread recessed portion
- 23: continuous hole
- 31: fuel assembly
- 100: nuclear reactor

## Claims

1. A nuclear reactor including a core plate (22) and a fuel guide pin (1), the fuel guide pin (1) comprising:
a shrink fit portion (2) that is inserted into a recessed portion (22a) having a bottom and being provided in a core plate (22) and is fixed thereto by means of shrink fit;
a pin portion (3) provided above the shrink fit portion (2) and projecting from an upper surface of the core plate (22), over which a fuel to be loaded on the core plate (22) is inserted;
a constricted portion (4) which is provided between the shrink fit portion (2) and the pin portion (3), has a constricted shape with a diameter smaller than an outer diameter of the pin portion (3), and includes a lower narrowed portion (4a) which is smoothly narrowed toward a most constricted portion from a side of the shrink fit portion (2); and
an external threaded ring (6) which allows the pin portion (3) to be inserted therethrough and screws into an internal thread recessed portion (22d) provided in the core plate (22) so as to press the shrink fit portion (2) into the recessed portion (22a).

2. The nuclear reactor according to claim 1, further comprising a flange portion (5) which is provided to a lower side of the constricted portion (4) so as to continuously extend toward an outer radial direction, wherein the flange portion (5) comes into contact with an opening outer edge of the recessed portion (22a) upon the fixation of the shrink fit portion (2).

3. The nuclear reactor according to claim 1 or 2, wherein the shrink fit portion (2) is formed to have a length spaced apart from the bottom of the recessed portion (22a) upon insertion thereof.

4. The nuclear reactor according to any one of claims 1 to 3, further comprising an air vent hole (7) which is provided to pass through the shrink fit portion (2) and to be opened to inside and outside of the recessed portion (22a), and discharges air inside the recessed portion (22a) during the insertion of the shrink fit portion (2).

5. A fuel guide pin (1) attachment method for nuclear reactor for attaching to a core plate (22) a fuel guide pin (1) including a constricted portion (4) which is provided between a shrink fit portion (2) and a pin portion (3) in a constricted shape having a smaller diameter than an outer diameter of the pin portion (3) and has a lower narrowed portion (4a) smoothly narrowed toward a most constricted portion from a side of the shrink fit portion (2), the method comprising:
inserting the shrink fit portion (2), which has been cooled, into a recessed portion (22a) which is provided in the core plate (22) and has a bottom; and
screwing an external threaded ring (6), into which the pin portion (3) has been inserted, into an internal thread recessed portion (22d) provided in the core plate (22) so as to press the shrink fit portion (2) into the recessed portion (22a), after the shrink fit portion (2) is expanded and thereby fixed to the recessed portion (22a).

6. The fuel guide pin (1) attachment method for nuclear reactor according to claim 5, further comprising fixing the core plate (22) and the external threaded ring (6) by welding after the external threaded ring (6) is screwed into the internal thread recessed portion (22d).

## Patentansprüche

1. Kernreaktor, der eine Kernplatte (22) und einen Brennstoffführungsstift (1) umfasst, wobei der Brennstoffführungsstift (1) umfasst:
einen Schrumpfpassteil (2), der in einen vertieften Teil (22a) eingeführt wird, welcher einen Boden hat und der in einer Kernplatte (22) vorgesehen und daran mittels des Schrumpfsitzes befestigt ist,
einen Stiftteil (3), der oberhalb des Schrumpfpassteils (2) vorgesehen ist und der aus einer oberen Fläche der Kernplatte (22) herausragt, über welche ein Brennstoff, der auf die Kernplatte (22) geladen werden soll, eingeführt wird,
einen eingeschnürten Teil (4), der zwischen dem Schrumpfpassteil (2) und dem Stiftteil (3) vorgesehen ist, eine eingeschnürte Form mit einem Durchmesser hat, der kleiner als ein Außendurchmesser des Stiftteils (3) ist, und einen unteren eingeengten Teil (4a) hat, der glatt in Richtung auf einen am stärksten eingeschnürten Teil von einer Seite des Schrumpfpassteils (2) eingeengt ist, und
einen äußeren Gewindering (6), der ermöglicht, dass der Stiftteil (3) in denselben eingeführt wird und sich in einen vertieften internen Gewindeteil (22d) einschraubt, der in der Kernplatte (22) vorgesehen ist, um so den Schrumpfpassteil (2) in den vertieften Teil (22a) einzupressen.

2. Kernreaktor nach Anspruch 1, der ferner einen Flanschteil (5) umfasst, der auf einer unteren Seite des eingeschnürten Teils (4) vorgesehen ist, um sich so kontinuierlich in eine äußere radiale Richtung zu erstrecken, wobei der Flanschteil (5) in Kontakt mit einer Öffnungsaußenkante des vertieften Teils (22a) bei der Befestigung des Schrumpfpassteils (2) kommt.

3. Kernreaktor nach Anspruch 1 oder 2, wobei der Schrumpfpassteil (2) so gebildet ist, dass er eine Länge hat, die einen Abstand vom Boden des vertieften Teils (22a) beim Einfügen desselben hat.

4. Kernreaktor nach einem der Ansprüche 1 bis 3, der ferner ein Nachströmloch (7) umfasst, das für den Durchgang durch den Schrumpfpassteil (2) und zur Öffnung zur Innenseite und Außenseite des vertieften Teils (22a) vorgesehen ist und Luft im Innern des vertieften Teils (22a) während des Einführens des Schrumpfpassteils (2) ablässt.

5. Befestigungsverfahren für einen Brennstoffführungsstift (1) für einen Kernreaktor zum Befestigen eines Brennstoffführungsstiftes (1), einschließlich eines eingeschnürten Teils (4), der zwischen einem Schrumpfpassteil (2) und einem Stiftteil (3) in einer eingeschnürten Form vorgesehen ist, die einen kleineren Durchmesser als ein Außendurchmesser des Stiftteils (3) hat und einen niedrigen eingeschränkten Teil (4a) hat, der glatt in Richtung auf einen am stärksten eingeschnürten Teil von einer Seite des Schrumpfpassteils (2) eingeengt ist, an einer Kernplatte (22), wobei das Verfahren umfasst:
Einführen des Schrumpfpassteils (2), der gekühlt worden ist, in einen vertieften Teil (22a), der in der Kernplatte (22) vorgesehen ist und einen Boden hat, und
Einschrauben eines Außengewinderings (6), in den der Stiftteil (3) eingeführt wurde, in einen vertieften Teil (22d) mit Innengewinde, der in der Kernplatte (22) vorgesehen ist, um so den Schrumpfpassteil (2) in den vertieften Teil (22a) einzupressen, nachdem der Schrumpfpassteil (2) erweitert ist und dadurch am vertieften Teil (22a) befestigt ist.

6. Befestigungsverfahren für den Brennstoffführungsstift (1) für den Kernreaktor nach Anspruch 5, das ferner das Befestigen der Kernplatte (22) und des Außengewinderings (6) durch Schweißen umfasst, nachdem der Außengewindering (6) in den vertieften Innengewindeteil (22d) geschraubt ist.

## Revendications

1. Réacteur nucléaire comprenant une plaque de coeur (22) et une broche de guidage de combustible (1), la broche de guidage de combustible (1) comportant :
une partie à ajustement par contraction (2) qui est insérée dans une partie renfoncée (22a) ayant un fond et qui est prévue dans une plaque de coeur (22) et est fixée dessus au moyen d'un ajustement par contraction ;
une partie de broche (3) prévue au-dessus de la partie à ajustement par contraction (2) et qui dépasse d'une surface supérieure de la plaque de coeur (22), sur laquelle un combustible devant être chargé sur la plaque de coeur (22) est inséré ;
une partie rétrécie (4) qui est prévue entre la partie à ajustement par contraction (2) et la partie de broche (3), a une forme rétrécie avec un diamètre plus petit qu'un diamètre extérieur de la partie de broche (3), et comprend une partie rétrécie inférieure (4a) qui est rétrécie de manière régulière vers une partie la plus rétrécie depuis un côté de la partie à ajustement par contraction (2) ; et
une bague filetée externe (6) qui permet à la partie de broche (3) d'être insérée à travers et se visse dans une partie renfoncée à filetage interne (22d) prévue dans la plaque de coeur (22) de façon à appuyer la partie à ajustement par contraction (2) dans la partie renfoncée (22a).

2. Réacteur nucléaire selon la revendication 1, comportant en outre une partie de bride (5) qui est prévue sur un côté inférieur de la partie rétrécie (4) de façon à s'étendre de manière continue vers une direction radiale extérieure, dans lequel la partie de bride (5) vient en contact avec un bord extérieur d'ouverture de la partie renfoncée (22a) lors de la fixation de la partie à ajustement par contraction (2).

3. Réacteur nucléaire selon la revendication 1 ou 2, dans lequel la partie à ajustement par contraction (2) est formée pour avoir une longueur espacée du fond de la partie renfoncée (22a) lors de son insertion.

4. Réacteur nucléaire selon l'une quelconque des revendications 1 à 3, comportant en outre un évent (7) qui est prévu pour passer à travers la partie à ajustement par contraction (2) et pour être ouvert sur l'intérieur et l'extérieur de la partie renfoncée (22a), et évacue de l'air à l'intérieur de la partie renfoncée (22a) pendant l'insertion de la partie à ajustement par contraction (2).

5. Procédé de fixation d'une broche de guidage de combustible (1) pour un réacteur nucléaire destiné à fixer sur une plaque de coeur (22) une broche de guidage de combustible (1) comprenant une partie rétrécie (4) qui est prévue entre une partie à ajustement par contraction (2) et une partie de broche (3) dans une forme rétrécie ayant un diamètre plus petit qu'un diamètre extérieur de la partie de broche (3) et a une partie rétrécie inférieure (4a) rétrécie de manière régulière vers une partie la plus rétrécie depuis un côté de la partie à ajustement par contraction (2), le procédé comportant le fait de :
insérer la partie à ajustement par contraction (2), qui a été refroidie, dans une partie renfoncée (22a) qui est prévue dans la plaque de coeur (22) et a un fond ; et
visser une bague filetée externe (6), dans laquelle la partie de broche (3) a été insérée, dans une partie renfoncée à filetage interne (22d) prévue dans la plaque de coeur (22) de façon à appuyer la partie à ajustement par contraction (2) dans la partie renfoncée (22a), une fois que la partie à ajustement par contraction (2) est dilatée et ainsi fixée sur la partie renfoncée (22a).

6. Procédé de fixation d'une broche de guidage de combustible (1) pour un réacteur nucléaire selon la revendication 5, comportant en outre le fait de fixer la plaque de coeur (22) et la bague filetée externe (6) par soudage une fois que la bague filetée externe (6) est vissée dans la partie renfoncée à filetage interne (22d).
